# EUROPEAN PATENT APPLICATION

(11) **EP 2 532 887 A2**
(43) Date of publication of application: **12.12.2012**
(21) Application number: 12004311.2
(22) Date of filing: 06.06.2012
(51) Int. Cl.: F03D 7/02, F16H 1/46

(54) **Power transmission device of wind power generation equipment**

(30) Priority: 06.06.2011 JP 2011126618
(71) Applicant: Sumitomo Heavy Industries, Ltd., Tokyo 141-6025 (JP)
(72) Inventor: Minegishi, Kiyoji, Obu-shi Aichi 474-8501 (JP); Kojima, Makoto, Tokyo 141-6025 (JP)
(74) Representative: Carstens, Dirk Wilhelm

(57) **Abstract**

In a reduction gear (power transmission device) of wind power generation equipment that includes a first and second simple planetary gear mechanisms 42 and 44 and casings 88 and 90 accommodating output members (low speed member) 66 and 86 of the first and second simple planetary gear mechanisms 42 and 44, the output members 66 and 88 include first opposing surfaces 66F, 86F1, and 86F2, the casings include second opposing surfaces 88F, 90F1, 90F2, the first and second opposing surfaces 66F and 88F, 86F1 and 90F1, and 86F2 and 90F2 are disposed to be opposite to each other so that the first and second opposing surfaces do not contact each other when being assembled and contact each other when a load which is transmitted to the output members 66 and 86 exceeds predetermined values L66 and L86 which are set to a smaller value than extreme value loads Lm66 and Lm86 which is a limit which can be transmitted to the output members 66 and 86.

## Description

### BACKGROUND OF THE INVENTION

### Field of the Invention

Priority is claimed on Japanese Patent Application No. 2011-126618, filed June 6, 2011, the content of which is incorporated herein by reference.

The present invention relates to a power transmission device, and particularly, to a power transmission device which is suitable for use in wind power generation equipment.

### Description of Related Art

In wind power generation equipment, a power transmission device such as a reduction gear for performing yaw control which rotates a nacelle (generator room) in a horizontal plane with respect to the wind through the driving force of a motor, a reduction gear for performing pitch control which changes the direction (inclination) of a windmill blade with respect to the wind, or a speed increasing device which speeds up the slow rotation of the windmill blade and introduces the rotation into a generator are assembled.

In Japanese Unexamined Patent Application Publication No. 2007-205575, a reduction gear which performs yaw driving of the nacelle is disclosed. In the reduction gear, a speed reduction mechanism is used in which a simple planetary gear mechanism which extracts the revolutions of the planetary gear from an output member and a oscillating internal engagement type planetary gear mechanism which extracts rotation are combined with each other.

An output pinion is provided on the output member. The output pinion meshes with an external gear which is provided on a cylindrical strut side of the wind power generation equipment, and if the output pinion is rotated, the nacelle (which is mounted to the reduction gear) is driven to be turned with respect to the cylindrical strut by the reaction.

### SUMMARY OF THE INVENTION

Since wind power generation equipment is installed in the natural environment, the wind power generation equipment may sometimes be subjected to turbulent strong winds or gusts. If a windmill blade is subjected to a strong wind, the power transmission device in the wind power generation equipment is subjected to a large wind force load from the output member side, an excessively strong torque is applied to each member or the like in the reduction gear, and sometimes, there is a problem of the wind power generation equipment being damaged.

On the other hand, in the case of the power transmission device of the wind power generation equipment, since the power transmission device needs to be mounted in a narrow space, miniaturization of the power transmission device is strongly desired. Moreover, since the size of a mounting hole or the like in a main body side (for example, a structure body of a nacelle in the case of a reduction gear for yaw drive) of the wind power generation equipment for mounting the power transmission device may be determined, there is a problem in that the size of the power transmission device itself cannot be freely increased.

The present invention is made in order to solve problems of the related art, an object thereof is to provide a power transmission device capable of effectively preventing each element from being damaged, failing, or the like without increasing the size of the power transmission device itself even when a huge load is applied from the outside.

According to an aspect of the present invention, there is provided a power transmission device of wind power generation equipment that includes a planetary gear mechanism and a casing accommodating the planetary gear mechanism, wherein a low speed member of the planetary gear mechanism includes a first opposing surface and the casing includes a second opposing surface, and the first and second opposing surfaces are disposed to be opposite to each other so that the first and second opposing surfaces do not contact each other when being assembled and contact each other when a load which is transmitted to the low speed member exceeds a predetermined value, and the predetermined value is set to a smaller value than an extreme value load which is the limit which can be transmitted to the low speed member.

In the planetary gear mechanism of the power transmission device according to the present invention, the low speed member includes the first opposing surface, and the casing includes the second opposing surface. The first and second opposing surfaces are disposed to be opposite to each other so that the first and second opposing surfaces do not contact each other when being assembled and contact each other when a load which is transmitted to the low speed member exceeds a predetermined value (minute gaps having such characteristics are formed between the first and second opposing surfaces when being assembled). The "predetermined value" at which the first and second opposing surfaces start the contact is set to a smaller value than an extreme value load. The "extreme value load" is the limit load which can be transmitted to the low speed member and will be described hereinafter.

According to the power transmission device of the present invention, the low speed member can be smoothly rotated without contacting the casing at the time of most of operation. In addition, when the load which is applied to the low speed member exceeds the predetermined value, the first and second opposing surfaces contact each other, and the low speed member can receive a supporting reaction force from the casing side.

A contact pressure between the first and second opposing surfaces is increased as much as the load which is applied to the low speed member is increased. Therefore, the first and second opposing surfaces function a "brake mechanism" which stronger acts as the load which is applied to the low speed member is increased. As a result, a load burden on each member of the power transmission system is decreased, and occurrence of damage, failure, or the like is prevented.

According to the power transmission device of the invention, it is possible to effectively prevent each element from being damaged, failing, or the like without increasing the size of the power transmission device itself even when a huge load is applied from the outside.

### BRIEF DESCRIPTION OF THE DRAWINGS

Fig. 1 is an overall cross-sectional view of a reduction gear (power transmission device) which is used in wind power generation equipment according to an example of an embodiment of the present invention.
Fig. 2 is an enlarged view of the main portions of the reduction gear of Fig. 1.
Fig. 3 is a cross-sectional view taken along a line III-III of the reduction gear of Fig. 1.
Fig. 4 is an overall cross-sectional view of a reduction gear which is used in wind power generation equipment according to an example of another embodiment of the present invention.
Fig. 5 is an overall cross-sectional view of a reduction gear which is used in wind power generation equipment according to an example of still another embodiment of the present invention.
Fig. 6 is a front view of the wind power generation equipment to which the reduction gear of Fig. 1 is applied.
Fig. 7 is a perspective view schematically showing a state in which the reduction gear of Fig. 1 is assembled into a nacelle of the wind power generation equipment.

### DETAILED DESCRIPTION OF THE INVENTION

Hereinafter, with reference to drawings, a reduction gear (power transmission device) of wind power generation equipment according to an example of an embodiment of the present invention will be described in detail.

First, an outline of a yaw driving device of the wind power generation equipment to which the reduction gear is applied is described.

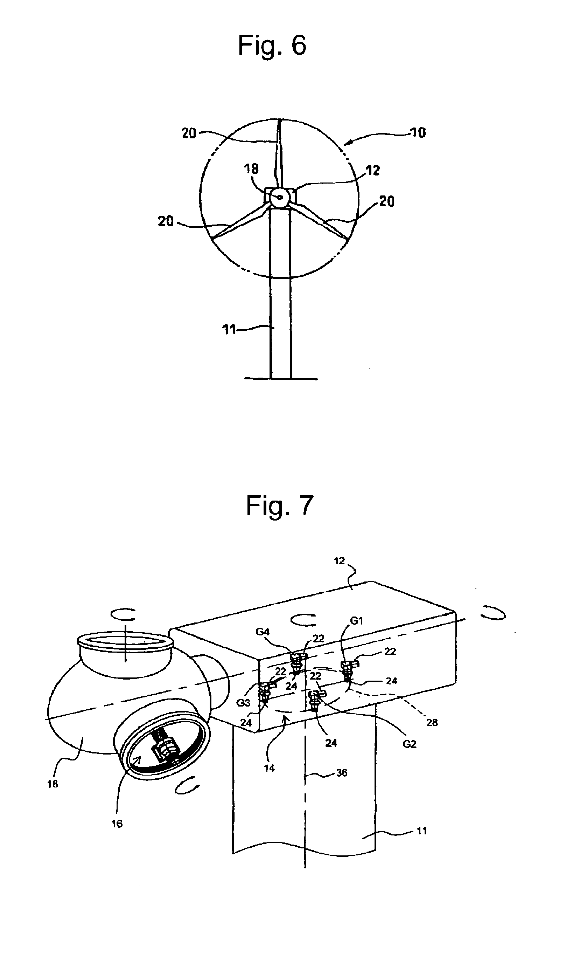

With reference to Figs. 6 and 7, the wind power generation equipment 10 includes a nacelle (generator room) 12 on the uppermost portion of a cylindrical strut 11. In Figs. 6 and 7, a yaw driving device 14 and a pitch driving device 16 are shown. The yaw driving device 14 controls the turning angle of the entire nacelle 12 with respect to the cylindrical strut 11, and the pitch driving device 16 controls the pitch angle of three windmill blades 20 which are mounted to a nose cone 18.

In the present embodiment, since the present invention is applied to the yaw driving device 14, here, the yaw driving device 14 is described.

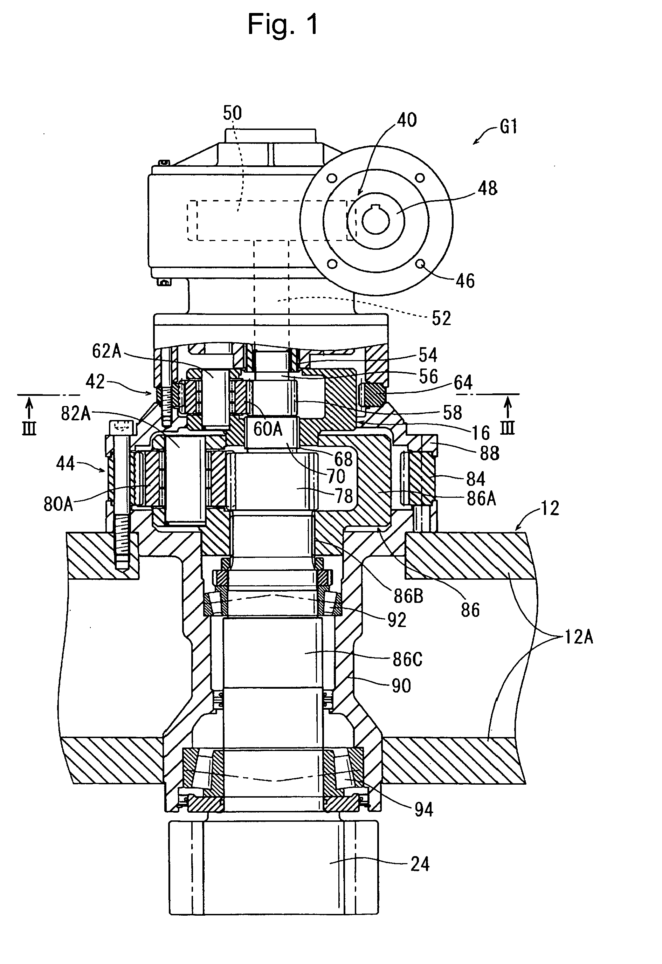

The yaw driving device 14 includes four reduction gears G1 to G4 to which a motor 22 and an output pinion 24 are attached, and a single internal gear 28 for turning which is meshed with each output pinion 24 (the internal gear 28 for turning may be an external gear). Each of the reduction gears G1 to G4 is fixed to a predetermined position of a structure body 12A (main body of wind power generation equipment: refer to Fig. 1) side of the nacelle 12.

As shown in Figs. 6 and 7, the internal gear 28 for turning which is meshed with the output pinions 24 of each of the reduction gear G1 to G4 is fixed to the cylindrical strut 11 side.

According to this configuration, if each output pinion 24 is simultaneously rotated by the motor 22 of each of the reduction gears G1 to G4, the output pinions 24 revolve around the center 36 (refer to Fig. 7) of the internal gear 28 for turning while being meshed with the internal gear 28 for turning. As a result, the structure body 12A of the nacelle 12 can relatively move with respect to (the internal gear 28 for turning which fixed to) the cylindrical strut 11, and the entire nacelle 12 can be turned around the center 36 of the internal gear 28 for turning which is fixed to the cylindrical strut 11. Thereby, the nose cone 18 can be toward a desired direction (for example, direction of windward) and can effectively receive the wind pressure.

Since each of the reduction gears G1 to G4 has the same configuration as one another, here, the reduction gear G1 is described.

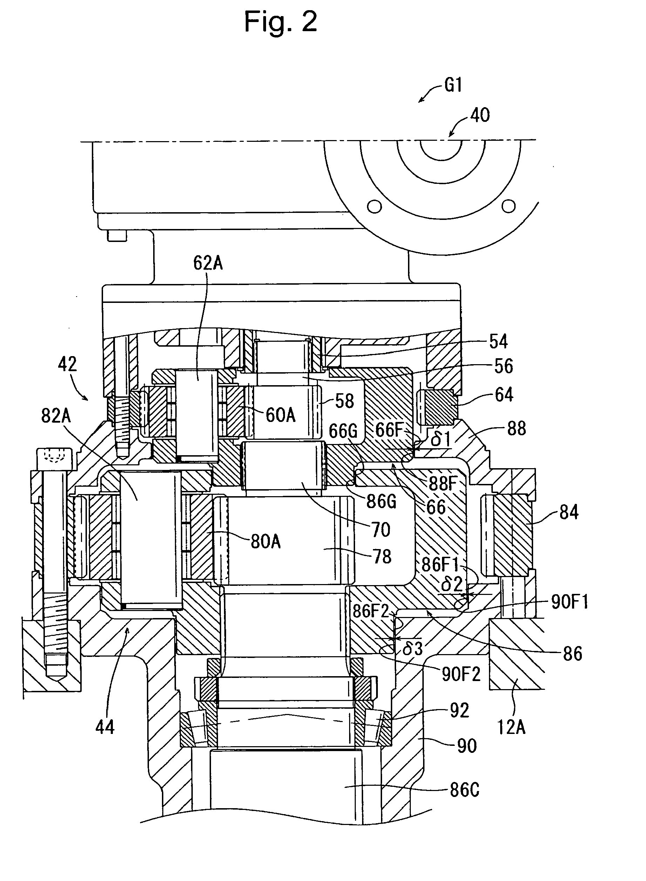

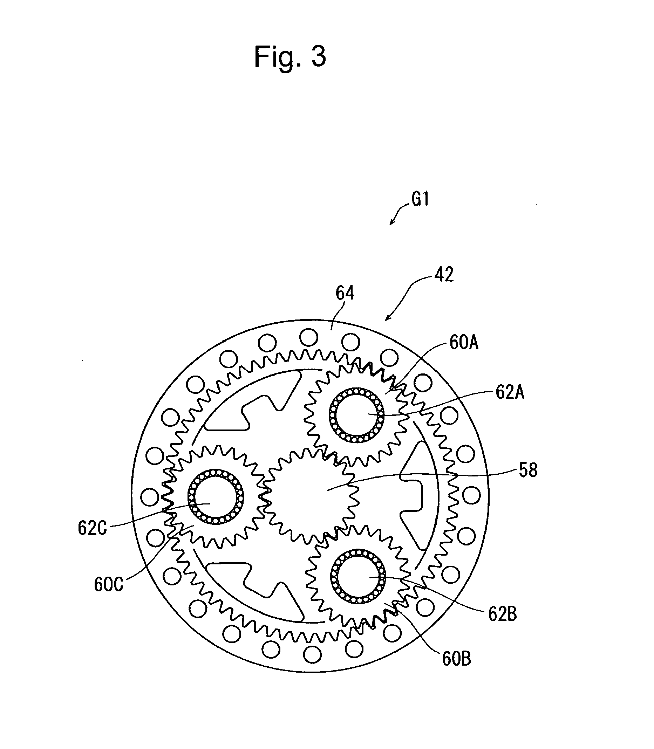

Fig. 1 is an overall cross-sectional view of the reduction gear (power transmission device) which is used in the wind power generation equipment according to an example of an embodiment of the present invention, Fig. 2 is an enlarged view of the main portions of the reduction gear of Fig. 1, and Fig. 3 is a cross-sectional view taken along a line III-III of the reduction gear of Fig. 1.

The reduction gear G1 includes the motor 22 (not shown in Fig. 1: refer to Fig. 7), a worm speed reduction mechanism 40, a first simple planetary gear mechanism 42, and a second simple planetary gear mechanism 44 on a power transmission path in this order.

Hereinafter, the order of the power transmission path will be described.

The motor 22 is not shown in Fig. 1 and is mounted in a direction perpendicular to the paper surface in Fig. 1 through mounting holes 46. Aworm and pinion 48 of the worm speed reduction mechanism 40 is connected to a motor shaft (not shown) of the motor 22 through a coupling. The worm and pinion 48 meshes with a worm gear 50 and changes the transmission direction of the power by 90°. The worm gear 50 is fixed to an intermediate shaft 52. The intermediate shaft 52 is connected to an input shaft 56 of the first simple planetary gear mechanism 42 through a coupling 54.

The first simple planetary gear mechanism 42 includes a sun gear 58 which is formed on the input shaft 56, three planetary gears 60A to 60C (refer to Fig. 3) which mesh with the sun gear 58, carrier pins 62A to 62C which rotatably support each of the planetary gears 60A to 60C, and an internal gear 64 with which each of the planetary gears 60A to 60C internally contacts and meshes. The first simple planetary gear mechanism 42 is configured so as to extract revolutions of the planetary gear 60A to 60C which are generated by the rotation of the sun gear 58 from an output member 66 to which the carrier pins 62A to 62C are fixed. The output member 66 of the first simple planetary gear mechanism 42 is connected to an input shaft 70 of the second simple planetary gear mechanism 44 through a spline 68.

The second simple planetary gear mechanism 44 includes a sun gear 78 which is formed on the input shaft 70, three planetary gears 80A to 80C (only 80A is shown) which mesh with the sun gear 78, carrier pins 82A to 82C (only 82A is shown) which rotatably support each of the planetary gears 80A to 80C, and an internal gear 84 with which each of the planetary gears 80A to 80C internally contacts and meshes. The second simple planetary gear mechanism 44 is configured so as to extract revolutions of the planetary gear 80A to 80C which are generated by the rotation of the sun gear 78 from an output member 86 to which the carrier pins 82A to 82C are fixed. The output member 86 of the second simple planetary gear mechanism 44 is constituted by a carrier portion 86A and a shaft portion 86C which is connected to the carrier portion 8 6A through the spline 86B, and the above-described output pinion 24 is integrally fixed to the end of the shaft portion 86C.

A configuration of the main portions of the present invention will be described in detail, mainly through reference to Fig. 2.

In the present embodiment, a first opposing surface 66F according to the present invention is formed on the output member (low speed member) 66 of the first simple planetary gear mechanism 42, and a second opposing surface 88F according to the present invention is formed on a casing 88 which accommodates the first simple planetary gear mechanism 42.

The first and second opposing surfaces 66F and 88F include the following characteristics. That is, each of the first and second opposing surfaces 66F and 88F do not contact each other at the time of being assembled (the state where the reduction gear G1 is assembled: when no load is applied to the output member 66), however, if the load transmitted to the output member 66 exceeds a predetermined value L66, the first and second opposing surfaces 66F and 88F contact each other (by deviation of the shaft center of the output member 66, deformation of the output member itself, or the like). That is, when the reduction gear G1 is assembled, each of the first and second opposing surfaces 66F and 88F is disposed so as to be opposite to each other while having a minute gap δ1 and do not contact each other.

On the other hand, also in the second simple planetary gear mechanism 44, anti-load side first and second opposing surfaces 86F1 and 90F1 and load side first and second opposing surfaces 86F2 and 90F2 each are formed on the output member 86 and a casing 90 which accommodates the output member 86. The output member 86 of the second simple planetary gear mechanism 44 is supported by a pair of tapered roller bearings 92 and 94, and both of the anti-load side first and second opposing surfaces 86F1 and 90F1 and the load side first and second opposing surface 86F2 and 90F2 are formed at the outside position in the axial direction (furtheranti-loadside (anti output pinion 24 side) of the tapered roller bearing 92 of the anti-load side) of the pair of tapered roller bearings 92 and 94.

The anti-load side first and second opposing surfaces 86F1 and 90F1 and the load side first and second opposing surfaces 86F2 and 90F2 of the second simple planetary gear mechanism 44 also include the following characteristics. That is, the surfaces 86F1 and 90F1 and the surfaces 86F2 and 90F2 do not contact each other at the time of being assembled (the state where the reduction gear G1 is assembled: when no load is applied to the output member 86), however, if the load transmitted to the output member 86 exceeds a set and predetermined value L86, the surfaces 86F1 and 90F1 and the surfaces 86F2 and 90F2 contact each other (due to deviation of the shaft center of the output member 86, deformation of the output member itself, or the like). That is, when the reduction gear G1 is assembled, the anti-load side first and second opposing surfaces 86F1 and 90F1 and the load side first and second opposing surfaces 86F2 and 90F2 each are disposed so as to be opposite to each other while having minute gaps δ2 and δ3, and do not contact each other.

The dimensions of the minute gaps δ2 and δ3 in the second simple planetary gear mechanism 44 (because the mechanisms differ, an overarching statement cannot be made, however, in general) are greater than the minute gap δ1 in the first simple planetary gear mechanism 42. In addition, the minute gap δ2 of the anti-load side first and second opposing surfaces 86F1 and 90F1 is slightly greater than the minute gap δ3 of the load side first and second opposing surface 86F2 and 90F2 (since the surfaces 86F1 and 90F1 are farther from the output pinion 24 than the surfaces 86F2 and 90F2, and have greater diameters than those of the surfaces 86F2 and 90F2). Moreover, specifically, the dimension of the minute gap δ3 at a final stage is about 40 to 100 µm in wind power generation equipment having a class of 1.5 to 3.0 MW (1500 to 3000 kW).

If it is assumed that "wind force load" is input from the output pinion 24 side of the reduction gear G1 through the internal gear 28 for turning, the wind force load is to rotate each rotation element of the reduction gear G1. Moreover, if the load (torque) which is transmitted to the power transmission path of the reduction gear G1 is increased, elastic deformation is generated (mainly in the torsion direction) in the carrier pin or the carrier itself. As a result, for example, deformation is generated in the radial direction of the output member 86. Moreover, at this time, not only the rotating torque in the circumferential direction but also a radial load which is generated by meshing between the internal gear 28 for turning and the output pinion 24 are simultaneously input to the output member 86. However, since the radial load which is generated by the meshing between the internal gear 28 for turning and the output pinion 24 is increased in proportion to the input "wind force load", the more the deviation in the shaft center (that is, displacement in the radial direction) of the output member 86 increases, the more the "wind force load" increases. In the case of the output member 86, influence of the radial load is particularly great. Moreover, various disturbance loads are also input. By these factors, the displacement in the radial direction due to the deviation in the shaft center or the deformation according to the wind force load is generated in the output member 86.

On the other hand, since a speed reduction ratio (or a speed increasing ratio) from the motor 22 (or from the output pinion 24) or the load transmission mechanism of the output member 66 also is different from those of the output member 86, the absolute values are different to each other. However, the deviation in the shaft center or the deformation according to the wind force load is also generated in the output member 66. In the case of the output member 66, influence of a floating assembly (assembly having "play" for obtaining a self aligning function) of the first and second simple planetary gear mechanisms 42 and 44 also is great.

In all cases, the deviation in the shaft center or the deformation of the output members 66 and 86 is strongly correlated with the load transmitted to the output members 66 and 86. That is, the more the wind force load qualitatively increases, the greater the displacement in the radial direction in each of the first and second opposing surfaces of the output members 66 and 86. Moreover, amount of the deviation in the shaft center or the deformation (displacement in the radial direction) is changed according to the material, the shape, and the size of the output members 66 and 86, the speed increasing ratio from the output pinion 24, or the like.

Therefore, by performing the following procedure, that is, (a) at the time when the loads transmitted to the output members 66 and 86 each exceed the predetermined values L66 and L86, according to a test, a simulation, or the like, the minute gap δ1 is detected and confirmed in advance so that the first and second opposing surface 66F and 88F contact each other exactly, the minute gap δ2 is detected and confirmed in advance so that the anti-load side first and second opposing surface 86F1 and 90F1 exactly contact each other, or the minute gap δ3 is detected and confirmed in advance so that the load side first and second opposing surface 86F2 and 90F2 contact each other exactly; (b) the shapes or the sizes of the output members 66 and 86 and the shapes or the size of the casings 88 and 90 are designed so that the minute gaps δ1 to δ3 having the dimensions are formed between each opposing surface at the time of assembling; the reduction gear G1 can be manufactured in which each of the first and second opposing surfaces can contact each other with high reproducibility at the time when the loads transmitted to the output members 66 and 86 each exceed the predetermined values L66 and L86.

Here, in explanation of the predetermined values L66 and L86, two loads are defined as follows.

### [Extreme Value Load Lm66 and Lm86]

Extreme value loads Lm66 and Lm86 are loads (limit load which can be transmitted to the output members 66 and 86) at which the output members 66 and 86 does not break even though the load is applied to the output members 66 and 86 only once during their service life (twenty years in the case of the reduction gear of the wind power generation equipment). In the present embodiment, the extreme value loads Lm66 and Lm86 are twice the loads Ls66 and Ls8 6 equivalent to the rated output torque (although deviation of the value is slightly large). Like this example, in the wind power generation equipment of a 2MW class, when the number of the reduction gears is four, the extreme value load Lm86 is about 30 to 120 k Nm. The extreme value load Lm66 is decreased by the amount the speed reduction ratio differs.

### [Load Ls66 and Ls86 Equivalent to Rated Torque]

The loads Ls66 and Ls86 equivalent to the rated torque each mean a load which is applied to the output members 66 and 86 when the connected motor 22 outputs the rated torque. When the speed reduction ratios from the motor 22 up to the output members 66 and 86 each are Gr66 and Gr86 (Gr66 < Gr86), the load Ls66 equivalent to the rated torque of the output member 66 becomes twice of the load Ls86 equivalent to the rated torque of the output member 86 (Gr66/Gr86). Since (Gr66/Gr86) is less than 1, Ls66 < Ls86 is satisfied.

In the present embodiment, the predetermined values L66 and L86 are set to a value smaller than the extreme value loads Lm66 and Lm86 of each of the output members 66 and 86 (L66 < Lm66, L86<Lm86). More specifically, the predetermined values L66 and L86 are set to be the same as the loads Ls66 and Ls86 equivalent to the rated torque. In the preferable range, the predetermined values L66 and L86 are about -10% to +30% of the loads Ls66 and Ls86 equivalent to the rated torque. The range is set as described above due to the following reasons. That is, if the predetermined values L66 and L86 are too small, the output members frequently come into contact when being driven from the motor 22 side; on the other hand, if the predetermined values are too great, there is a concern that an appropriate damage prevention effect may not be exerted. Moreover, when a protection of the device is preferentially considered, the predetermined values may be decreased up to about 1/3 to 1/2 of the loads Ls66 and Ls86 equivalent to the rated torque (about 1/3 to 1/2 are the lower limit).

Moreover, the first and second opposing surfaces 66F, 88F, 86F1, 90F1, 86F2, and 90F2 each are configured by surfaces (vertical surface in the case of the present embodiment) parallel in the axial directions of the first and second simple planetary gear mechanisms 42 and 44. In addition, the reduction gear (power transmission device) G1 according to the present embodiment includes the first and second plurality of simple planetary gear mechanisms 42 and 44. However, the load side first and second opposing surfaces 86F2 and 90F2, which are each formed on the output member (low speed member) 86 of the second simple planetary gear mechanism 44 which is positioned in the final stage and in the casing 88, are formed at a position which becomes the same plane as the structure body 12A of the nacelle 12 when the reduction gear G1 is installed on the structure body 12A of the nacelle 12. Since the distance in the axial direction up to the structure body 12A (member of the main body side of the wind power generation equipment) of the nacelle 12 is the shortest (the distance in the axial direction is zero due to the same plane), this means that the casing 90 itself is directly supported by the structure body 12A of the nacelle 12 from the outside of the casing 90.

Moreover, in the present embodiment, the opposing surfaces 66G and 86G, which contact each other when the load of the output member 66 is increased, are also formed between the output member 66 of the first simple planetary gear mechanism 42 and the output member 86 of the second simple planetary gear mechanism 44. In this way, according to the present invention, the opposing surfaces may be formedwhich contact each other between two members other than between the output member and the casing when the applied load is increased.

Next, an operation of the reduction gear G1 will be described.

### [When Yaw Drive Of Nacelle 12 Is Positively Performed by Motor 22]

The rotation of the motor shaft of the motor 22 is decelerated to a first stage by the meshing between the worm and pinion 48 and worm gear 50 of the worm speed reduction mechanism 40 and is transmitted to the input shaft 56 of the first simple planetary gear mechanism 42 through the coupling 54.

If the input shaft 56 of first simple planetary gear mechanism 42 is rotated, the sun gear 58 which is formed on the input shaft 56 is rotated, and the planetary gears 60A to 60C revolve at the inside of the internal gear 64. The revolution component is extracted from the output member 66 through the carrier pins 82A to 82C and is transmitted to the input shaft 70 of the (final stage of) second simple planetary gear mechanism 44 through the spline 68.

Also in the second simple planetary gear mechanism 44, the speed reducing operation similar to that of the first simple planetary gear mechanism 42 is performed, the revolutions of the planetary gears 80A to 80C are extracted from the carrier portion 86A of the output member 86 and is transmitted to the shaft portion 86C through the spline 86B.

The rotation of the output member 86 is transmitted to the output pinion 24 as it is. Since the output pinion 24 meshes with the internal gear 28 for turning and the internal gear 28 for turning is fixed to the cylindrical strut 11, through the reaction, the output pinion 24 revolves around the center 36 of the internal gear 28 for turning while rotating (refer to Fig. 7). Since the reduction gear G1 is fixed to the structure body 12A of the nacelle 12, as a result, the nacelle 12 rotates (turns) in the horizontal direction with respect to the shaft center 36 of the internal gear 28 for turning of the cylindrical strut 11 side.

Here, when the wind is not very strong, generally, the yaw drive by the motor 22 is realized by a torque of 1/2 or less of the rated output torque of the motor 22. Thereby, in the most when general yaw driving is performed by the motor 22, the first and second opposing surfaces 66F and 88F, 86F1 and 90F1, 86F2 and 90F2 of the output members 66 and 86 and the casings 88 and 90 respectively do not contact each other. Therefore, the output members 66 and 86 can rotate in a free state, and mostly, transmission loss does not occur when the driving force is transmitted from the motor 22.

On other hand, when the yaw drive of the nacelle 12 is performed while is being opposed by the rotational force which acts on the nacelle 12 due to a strong wind or a change in the wind direction, the motor 22 drives the reduction gear G1 at a torque which is close to the rated output torque. Thereby, when the predetermined values L66 and L86 are set to the value which is smaller than the loads Ls 66 and Ls 86 equivalent to the rated torque, the loads equal to or more than the predetermined values L66 and L86L each are nearly always applied to the output members 66 and 86 (due to the fact that only slight disturbance is applied when the predetermined values L66 and L86 are set to the value which is in the vicinity of the loads Ls66 and Ls86 equivalent to the rated torque). Thereby, the minute gaps δ1 to δ3 which are maintained at first between the first and seconds opposing surfaces are blocked, and the first and second opposing surfaces contact each other. Therefore, the output members 66 and 86 each rotate while being supported by the casings 88 and 90, deviation in the shaft center beyond the supported position is suppressed, and a stable rotation can be continuously performed.

### [When Wind force load Is Input From Output Pinion 24 Side]

In the present embodiment, when the wind force load is input from the output pinion side 24, by a self-locking function (function of preventing rotation when attempting to rotate from the load side) of the worm speed reduction mechanism 40, each member of the reduction gear G1 including the output members 66 and 86 is maintained in a stopped state. Thereby, the nacelle 12 does not vibrate in an uncontrolled state due to the wind.

Here, when the rotational force which acts on the nacelle 12 due to the wind or a change in the wind direction is not very strong and the load which is transmitted to the output members 66 and 86 is equal to or less than the predetermined values L66 and L86, each member in the reduction gear G1 has no problem in strength and can receive the torque or the like from the output pinion 24 side in the stopped state.

On the other hand, the wind is strong, for example, when a gust or the like acts on the windmill blade 20 and a "huge wind force load" attempting to forcibly turn the nacelle 12 is input from the output pinion 24 side of the reduction gear G1, the huge wind force load attempts to rotate each member of the reduction gear G1 (through the output pinion 24). Moreover, at this time, if the loads which are transmitted to the output members 66 and 86 of the reduction gear G1 each exceed the predetermined values L66 and L86, the first and second opposing surfaces 66F and 88F, 86F1 and 90F1, and 86F2 and 90F2 contact each other respectively.

In the present embodiment, the predetermined values L66 and L86 are set to about the loads Ls66 and Ls86 equivalent to the rated torque. From the standpoint of the extreme value loads Lm66 and Lm86, the predetermined values are only about 1/2 of the extreme value loads. Thereby, when the load which is transmitted to the output members 66 and 86 of the reduction gear G1 is considerably smaller than the extreme value loads Lm66 and Lm86, the first and second opposing surfaces 66F and 88F, the anti-load side first and second opposing surfaces 86F1 and 90F1, and the load side first and second opposing surfaces 86F2 and 90F2 respectively necessarily contact each other.

Thereby, the support stiffness of the output members 66 and 86 at each opposing surface is significantly increased, deviation in the shaft center or deformation is suppressed from increasing. Since the reaction force from the casings 88 and 90 side is increased as much as the wind force load is increased, as a result, the more the friction generated between each opposing surface increases, the more the wind force load is increased, and a great "brake action" can be obtained. Thereby, bending stress or torsion stress which is generated in each member of the reduction gear G1 is also decreased, and the damage thereof can be avoided.

Particularly, like the present embodiment, in the reduction gear G1 substituted for the self-locking function of the worm speed reduction mechanism 40 (having the speed reduction ratio of 30 or more in the state where a dedicated "variable" braking means is not disposed for the braking force) with respect to the wind force load which is input from the output pinion 24 side in order to reduce the cost, since the state where each member is completely stopped is maintained, there is significant concern that each member may be exposed to an extremely harsh state. However, in the present embodiment, since the braking function is effectively exerted when the wind force load is great, the burden on the self-locking of the worm speed reduction mechanism 40 is alleviated, and accordingly, the load burden on each member can be alleviated.

Moreover, for example, since these effects are not effects which can be obtained by electrically controlling using a sensor or the like, the effects can be certainly obtained even during power failure due to typhoons, severe thunderstorms, or the like.

In addition, for example, since the present embodiment is different from the configuration in which the driving force from the output pinion 24 side is "blocked" and the turning of the nacelle enters a completely free state, the nacelle 12 does not sway in an uncontrolled state. This is significantly important from the standpoint of the protection of the entire wind power generation equipment.

Moreover, according to the embodiment, in (the plurality of) first and second simple planetary gear mechanisms 42 and 44, the output member 86 of the second simple planetary gear mechanism 44, which is closest to the structure body (member of the main body side of the wind power generation equipment) 12A of the nacelle 12 side to which the reduction gear G1 is mounted, includes the anti-load side first opposing surface 86F1 and the load side first opposing surface 86F2. Moreover, the load side first opposing surface 86F2 is formed on the same plane (the distance in the axial direction is zero) as the structure body 12A of the nacelle 12 side to which the reduction gear G1 is mounted. Thereby, the stiffness of the structure body 12A of the nacelle 12 side to which the casing 90 is mounted also effectively acts on the improvement of the support stiffness of the output member 86.

Moreover, in the present embodiment, since the first and second opposing surfaces according to the present invention are formed at a total of three places (four places if the opposing surfaces of the output member are added), the entire support stiffness of the drive system is significantly increased at the time of a high load. In addition, since the first and second opposing surfaces are formed on the surface parallel to the axial direction of the first and second simple planetary gear mechanisms 42 and 44, the structure is simple, the formation itself is easily performed, and reproducibility of the effects is high.

Moreover, in the embodiment, since the anti-load side first and second opposing surfaces 86F1 and 90F1 and the load side first and second opposing surfaces 86F2 and 90F2 are formed at the outside position in the axial direction of the pair of bearings 92 and 94 which supports the output member 86, the magnitude of the load of the output member 86 can be precisely reflected to the change of the minute gaps δ2 and δ3 between the opposing surfaces. Thereby, reproducibility of correlation between the magnitude of the load and the change of the minute gaps δ2 and δ3 is high. Moreover, according to this configuration, it is possible to more effectively exert the supporting function or the braking function.

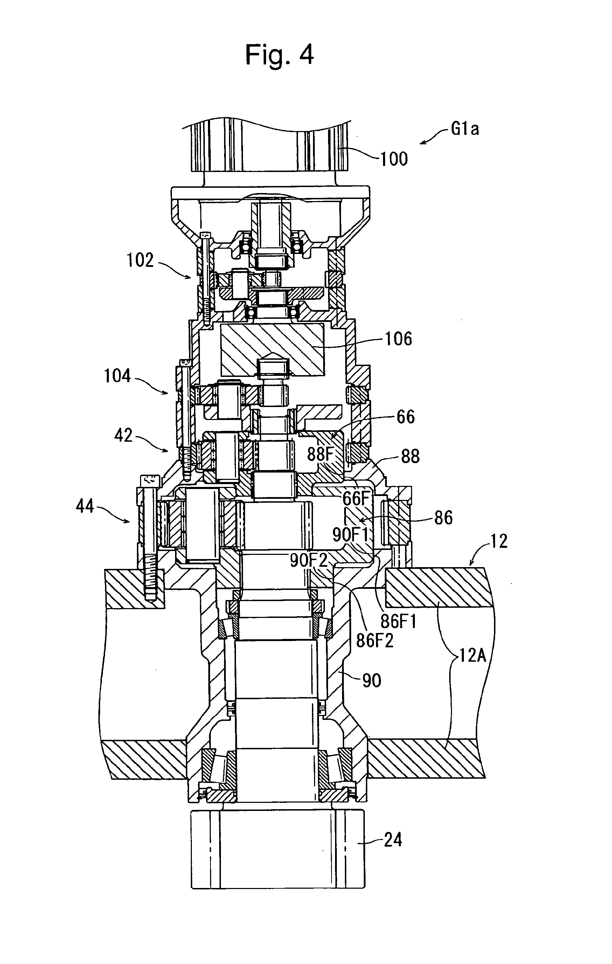

Fig. 4 shows a configuration example of another embodiment of the present invention.

Differences between a reduction gear G1a according to the present embodiment and the reduction gear G1 according to the previous embodiment are three points as follows. That is, (a) a third and a fourth simple planetary gear mechanism 102 and 104 are adopted instead of the worm speed reduction mechanism (40), (b) a torque limit coupling 106 is assembled between the third and the fourth simple planetary mechanism 102 and 104, and (c) a brake mechanism (not shown) is assembled into the motor 100 due to the fact that the self-locking function of the worm speed reduction mechanism (40) which can be obtained in the previous embodiment cannot be obtained.

In the reduction gear G1a, the motor 100, the third and fourth simple planetary gear mechanisms 102 and 104, the first and second simple planetary gear mechanisms 42 and 44 are aligned in line in this order.

In the third and fourth simple planetary gear mechanisms 102 and 104 of the front stage side, particularly, the first and second opposing surfaces according to the present invention are not formed. The configuration of the first and second simple planetary gear mechanisms 42 and 44 of the rear stage side includes the first and second opposing surfaces 66F and 88F, the anti-load side first and second opposing surfaces 86F1 and 90F1, and the load side first and second opposing surfaces 86F2 and 90F2, and is the same as the configuration of the first and second simple planetary gear mechanisms 42 and 44 of the previous embodiment. Thereby, in each opposing surface, the effects of the present embodiment which are substantially the same as those of the reduction gear G1 in the previous embodiment can be obtained.

Moreover, in the present embodiment, when the torque which is actually transmitted to the torque limit coupling 106 is greater than a predetermined limit value Lmt1, the torque limit coupling 106 begins to slide.

As a result, even though the load which is input from the output pinion 24 side is greater than the load equivalent to the predetermined limit value Lmt1, it is possible to reliably prevent the reduction gear G1a from being damaged. Moreover, even when the torque limit coupling 106 is operated, since the reaction force corresponding to the predetermined limit value Lmt1 can be generated in each member of the reduction gear G1a, the nacelle 12 is not vibrated due to the wind in an uncontrolled state.

Since other configurations and the effects are similar to those of the previous embodiment, the same or the similar portions as the previous embodiments in drawings are denoted by the same reference numerals, and the overlapping explanation is omitted.

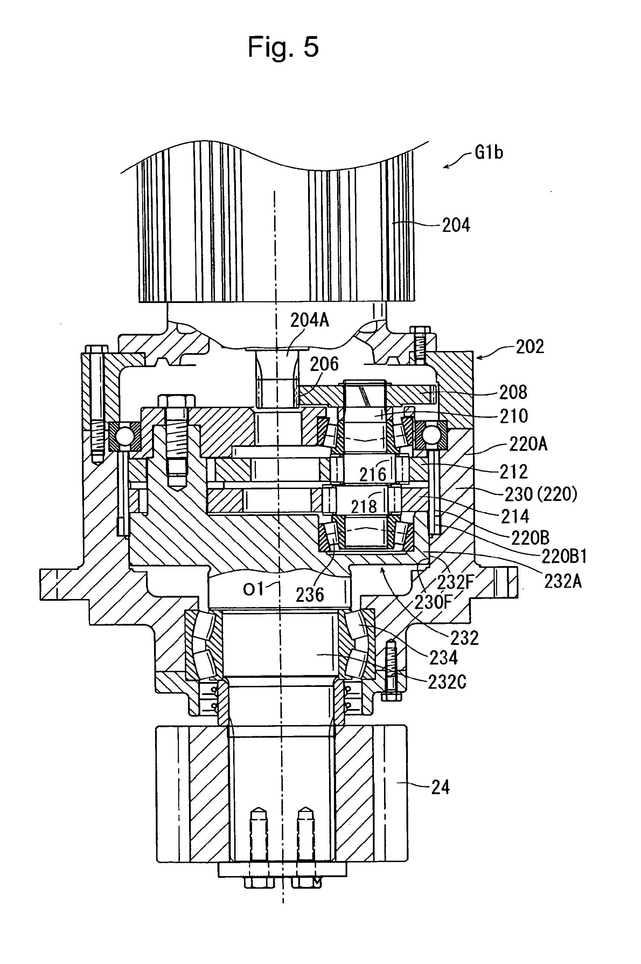

Fig. 5 shows an example of still another embodiment of the present invention.

In Fig. 5, a reduction gear G1b which is used in the pitch driving device 16 (refer to Fig. 7) of the wind power generation equipment is shown. The reduction gear G1b includes a planetary gear mechanism 202 referred to as a so-called oscillating internal engagement type.

A helical pinion 206 is formed at a tip of a motor shaft 204A of the motor 204. The helical pinion 206 meshes with three (only one is shown) helical gears 208. Three helical gears 208 each are fixed to three (only one is shown) eccentric body shafts 210. Eccentric bodies 216 and 218 for oscillating two planetary gears 212 and 214 are provided on the eccentric body shaft 210. Eccentric bodies 216 and 218 each are eccentric so as to have the same phase as each eccentric body shafts 210. The eccentric bodies 216 and 218 each are simultaneously rotated at the same rotating speed in the same phase, and therefore the planetary gears 212 and 214 are swung by a phase difference of 180° to each other and are each internally contact and mesh with an internal gear 220.

Moreover, a brake mechanism (not shown) is attached to the motor 204.

The internal gear 220 is configured by a main body 220A and a columnar pin 220B which is rotatably assembled into the main body 220A. The main body 220A of the internal gear 220 is integrally fixed to a casing 230, and the relative rotations between the planetary gears 212 and 214 and the internal gear 220 are extracted from an output member 232 as a revolution component around a shaft center O1 of the three eccentric body shafts 210 (that is, a rotation component of planetary gears 212 and 214).

In the output member 232 of the reduction gear G1b according to the present embodiment, a carrier portion 232A and a shaft portion 232C are integrated. The output member 232 is supported by the casing 230 through a self-aligning roller bearing 234. The columnar pin 220B configuring internal teeth of the internal gear 220 extends to the load side in the axial direction rather than to the meshing position between the planetary gears 212 and 214, and the extended portion 220B1 functions as a bearing which supports the (carrier portion 232A of) output member 232.

In the present embodiment, a first opposing surface 232F of the output member 232 and a second opposing surface 230F of the casing 230 accommodating the output member 232 are formed at the outside position in the radial direction of a bearing 236 (of a load side) which supports the eccentric body shaft 210.

Moreover, also in the present embodiment, the first and second opposing surfaces 232F and 230F do not contact each other at the time of being assembled, however, when the load which is transmitted to the output member 232 exceeds a predetermined value L232, the first and second opposing surfaces 232F and 230F are oppositely disposed so as to contact each other. In addition, the predetermined value L232 is set to a value (specifically, about a load Ls232 equivalent to the rated torque which is applied to the output member 232) smaller than the extreme value load Lm232 which is a limit which can be transmitted to the output member 232.

According to this configuration, also in the reduction gear G1b, the support stiffness of the output member 232 when a large wind force load is applied to the output member 232 can be increased, and an appropriate braking function can be obtained. Moreover, since the first and second opposing surfaces 232F and 230F are formed at the outside position in the radial direction of the bearing 236 supporting the eccentric body shafts 210, the support stiffness of the eccentric body shafts 210 can be simultaneously increased when a large load is input, and an appropriate braking force can be obtained. Therefore, the burden on the brake mechanism which is attached to the motor 204 can be alleviated, and accordingly, the load of each member such as the planetary gear mechanism 202 can be alleviated. Particularly, like the present embodiment, in the case of the oscillating internal engagement type planetary gear mechanism 202 in which the plurality of eccentric body shafts 210 are disposed so as to be offset from the shaft center of the internal gear 220 and each passes through the planetary gear 212 and 214, since the thickness of the output member 232 of the outside in the radial direction of the bearing 236 which supports the eccentric body shafts 210 is easily thinned and the strength is increased, the configuration is effective.

Since other configurations are similar to those of the previous embodiment, the overlapping explanation is omitted.

Moreover, in the embodiments, the first and second opposing surfaces are directly formed on the output member or the casing itself. However, the terms such as the "output member" and the "casing" each include a concept of "added members" which are integrated with the main body of the output member or the casing by press fitting, adhesion, bolts, or the like and as a result, configure a portion of the output member or the casing. Since the output member and the casing are large members and the manufacturing costs are expensive, flexibility of the design for making the first and second opposing surfaces which are a portion of the output member and the casing to an appropriate shape may be deficient. However, if the first and second opposing surfaces are formed on the added member, since the added member has a high freedom in selection or processing of the material and hardening treatment, the design freedom is greatly increased.

In addition, in the embodiments, the present invention is applied to the reduction gear of the yaw driving device or the "reduction gear" of the pitch driving device of the wind power generation equipment. However, if the present invention is considered in terms of the effects, the present invention may be applied to the "speed increasing device" which is disposed at the front stage of the generator of the wind power generation equipment (in the case of the planetary gear mechanism which is used in the speed increasing device, specifically, the "low speed member" according to the present invention is an input member of the planetary gear mechanism). That is, the "low speed member" is a member which has a relatively smaller rotating speed among the rotating members of the planetary gear mechanism.

The speed increasing device of the wind power generation equipment is used to convert a slow rotation (although having a torque) of the windmill blade into a fast rotation which is optimal for effectively driving the generator. In most cases, the simple planetary gear mechanism is assembled to the input stage of the speed increasing device of the wind power generation equipment. In the simple planetary gear mechanism, as described above, in most cases, the sun gear or the planetary gear is assembled in a floating state with respect to the internal gear (which is integrated with the casing) in order to obtain the self-aligning function, and in practice, the corresponding self-aligning function is obtained by the floating assembly (when the load is not excessive).

However, when an excessive load having a risk of damage is applied, the self-aligning function is not necessarily favorably operated, on the contrary, the inclination of the shaft center of the input member (low speed member) is increased, and accordingly, there is concern that a great bending stress may occur. By applying the invention, at this time, the input member can receive a supporting reaction force from the casing, and an appropriate brake can be obtained. As a result, the load of each member of the speed increasing device can be alleviated, particularly, a state where the generator is excessively rotated can be avoided.

Moreover, from the configuration and the effects of the present invention, the invention is not limited to the power transmission device of the wind power generation equipment. For example, the present invention may also be applied to a reduction gear (power transmission device) which is used in turning a deck crane, drill driving of a shield excavator, turning of a shovel for construction, or the like. The reasons why the present invention can be applied to the above-described uses are as follows. During the operation, the structures are subjected to influence of the wind, subj ected to influence of inertial force of heavies, or collide obstructions, underground rocks, or the like and are suddenly subjected to a large load (reaction force) from an object side to be worked, and therefore, in circumstances, there is a concern that circumstances similar to the circumstances in which the power transmission device of the wind power generation equipment is forcibly rotated by a huge wind force load may occur.

Particularly, in the reduction gear of the above-described uses, generally, in most cases, the reduction gear includes the output pinion at the end of the output member (low speed member), and the reduction gear meshes with a gear which is mounted to the other side member relatively moving with respect to the mounted main body. In the configuration, during operation, if a large load is applied from the outside, not only the rotating torque (due to the meshing between the gear and the output pinion) but also a large radial load are applied to the output member. Substantially, since the radial load is generated in proportion to the applied load, deformation in the radial direction or eccentricity of the output member is increased as much as the load is increased. Therefore, the present invention can be applied to the reduction gear (power transmission device) of the above-described uses, and the similar effects can be obtained.

Moreover, when the present invention is applied to uses other than the wind power generation equipment, during the service life of each device to which the power transmission device is mounted, the transmitted limit load in which the low speed member is not broken even though the load is applied to the low speed member only once is regarded to the "extreme value load", and a predetermined value may be set.

Even when the present invention is used in any use, in the present invention, the specific configuration of the speed reduction mechanism or the speed increasing mechanism of the power transmission device is not particularly limited as long as including the planetary gear mechanism.

Moreover, in the embodiments, the gap between the first opposing surface and the second opposing surface is set so that the predetermined value is about the load equivalent to the rated torque of the motor, when the load applied to the low speed member is not increased to the predetermined value, the supporting function is exerted. However, as long as the predetermined value is set to a smaller value than the extreme value load, the effects which are intended by the present invention can be correspondingly obtained. The predetermined value (the gap between the first opposing surface and the second opposing surface) may be appropriately set considering the transmission loss, the supporting function, the braking function, or the like.

Moreover, in the embodiments, the first opposing surface according to the present invention is formed on the low speed member of the planetary gear mechanism which is closest to the member of the main body side of the wind power generation equipment. However, the first opposing surface need not be necessarily formed on the position, and also need not be positioned on the same plane as the member of the main body side. Also in this case, at least the stiffness of the casing can be sufficiently used.

Moreover, in the present invention, the first and second opposing surfaces need not necessarily be formed on a plurality of locations, and the above-described effects can be correspondingly obtained even though the first and second opposing surfaces are formed at only one location. The formation location when the first and second opposing surfaces are formed at only one location is not particularly limited. For example, the output member of the planetary gear mechanism which is disposed in the final stage of the reduction gear G1 may include the first opposing surface. If the output member of the planetary gear mechanism which is disposed in the final stage is configured so as to include the first opposing surface, for example, since the relative sliding speed between the first opposing surface of the output member and the second opposing surface of the casing is significantly slow (for example, 0.1 rpm level) when the motor is driven, concerns such as fiction or heating due to the sliding between the low speed member and the casing can be reduced. Moreover, for example, the first opposing surface may be formed on the low speed member of the planetary gear mechanism of the stage other than the final stage. In this case, although the heating load at the first and second opposing surfaces is increased, the load of which the first and second opposing surfaces should be in charge can be decreased.

Moreover, in the embodiments, all the first and second opposing surfaces are formed at the outside position in the axial direction of the pair of bearings which supports the output member. However, in the present invention, for example, the position of the low speed member at which the first and second opposing surfaces are formed is not particularly limited.

In addition, in the present invention, the configuration of the planetary gear mechanism is not particularly limited to the examples of the embodiments. For example, the planetary gear mechanism may be a so-called center crank type of a oscillating internal engagement-planetary gear mechanism in which a single eccentric body shaft is disposed at the center of the planetary gear mechanism.

## Claims

1. A power transmission device of wind power generation equipment that includes a planetary gear mechanism and a casing accommodating the planetary gear mechanism,
wherein a low speed member of the planetary gear mechanism includes a first opposing surface and the casing includes a second opposing surface,
the first and second opposing surfaces are disposed to be opposite to each other so that the first and second opposing surfaces do not contact each other when being assembled and contact each other when a load which is transmitted to the low speed member exceeds a predetermined value, and
the predetermined value is set to a smaller value than an extreme value load which is a limit which can be transmitted to the low speed member.

2. The power transmission device of wind power generation equipment according to claim 1,
wherein the power transmission device is a reduction gear which includes a pinion meshing with a gear provided on a main body side of the wind power generation equipment at an output shaft, and the power transmission device includes an output member which extracts rotation or revolution of planetary gears of the planetary gear mechanism as the low speed member.

3. The power transmission device of wind power generation equipment according to claim 1 or 2,
wherein the power transmission device includes the planetary gear mechanism at a final stage, and
the low speed member of the planetary gear mechanism which is disposed at the final stage includes the first opposing surface.

4. The power transmission device of wind power generation equipment according to any one of claims 1 to 3,
wherein the power transmission device includes a plurality of speed reduction mechanism which includes the planetary gear mechanism, and
the planetary gear mechanism among the plurality of speed reduction mechanism is disposed at a position which is closest to a member of the main body side of the wind power generation equipment to which the power transmission device is mounted.

5. The power transmission device of wind power generation equipment according to any one of claims 1 to 4,
wherein the first and second opposing surfaces are formed on the same plane as the member of the main body side of the wind power generation equipment to which the power transmission device is mounted.

6. The power transmission device of wind power generation equipment according to any one of claims 1 to 5,
wherein the first and second opposing surfaces each are configured by a surface which is parallel to the axial direction of the planetary gear mechanism.

7. The power transmission device of wind power generation equipment according to any one of claims 1 to 6,
wherein the predetermined value is set to a range which is equal to or more than a load which is applied to the low speed member when a motor connected to the power transmission device outputs a rated torque.

8. The power transmission device of wind power generation equipment according to any one of claims 1 to 7,
wherein a pair of bearings which supports the low speed member is provided, and
the first and second opposing surfaces are formed at the outside position in an axial direction of the pair of bearings.

9. The power transmission device of wind power generation equipment according to any one of claims 1 to 8,
wherein the first and second opposing surfaces are provided on a plurality of locations of the power transmission device.

10. The power transmission device of wind power generation equipment according to any one of claims 1 to 9,
wherein the planetary gear mechanism includes a plurality of eccentric body shafts in which eccentric bodies for oscillating the planetary gears are provided,
the planetary gear mechanism is configured by a oscillating internal engagement type planetary gear mechanism in which the plurality of eccentric body shafts penetrate the planetary gears at a position which is offset from a shaft center of an internal gear of the planetary gear mechanism and the planetary gears oscillating at the inside of the internal gear, and
the first and second opposing surfaces are formed at the outside position in a radial direction of a bearing which supports the eccentric body shafts.
